# FASCICULE DE BREVET EUROPEEN

(11) **EP 0 539 287 B1**
(45) Date de publication et mention de la délivrance du brevet: **01.03.2000**
(21) Numéro de dépôt: 92402871.5
(22) Date de dépôt: 21.10.1992
(51) Int. Cl.: C04B 18/14, C04B 28/08, E01C 3/00

(54) **Composition pour assise de chaussée à base de laitier d'aciérie électrique et procédé pour la préparer**
Zusammensetzung einer Fahrbahn auf der Grundlage einer Elektro-Ofen-Stahlschlacke und Verfahren zu dessen Herstellung
Composition for a road foundation based on electro-furnace steel making slag and method for preparing the same

(30) Priorité: 22.10.1991 FR 9113029
(43) Date de publication de la demande: 28.04.1993
(73) Titulaire: EUROGRANULATS, 57280 Hauconcourt (FR)
(72) Inventeur: Todaro, Pierre, F-54690 Lay Saint Christophe (FR)
(74) Mandataire: Casalonga, Axel

(56) Documents cités:
- DE-A- 3 915 373
- DE-B- 1 293 072
- GB-A- 2 137 186
- CHEMICAL ABSTRACTS, vol. 101, no. 4, juillet 1984, page 243, colonne 1, abrégé no. 27557C, Columbus, Ohio, US; & JP-B-59 005 158 (NIHON JIRYOKU SENKO, INC.) 02-02-1984
- CHEMICAL ABSTRACTS, vol. 105, no. 16, octobre 1986, page 315, colonne 1, abrégé no. 138831q, Columbus, Ohio, US; & JP-A-61 077 649 (NIPPON MAGNETIC DRESSING CO., LTD) 21-04-1986

## Description

L'invention a pour objet une composition à base de laitier d'aciérie de four électrique destinée à la confection d'assises de chaussée ainsi que le procédé de préparation de cette composition.

Le laitier d'aciérie de four électrique (LAFE) est un sous-produit de la fabrication de l'acier. Ce laitier se présente sous la forme d'une roche artificielle basique dont les constituants principaux sont la chaux (CaO), l'oxyde de fer (Fe₂O₃), la silice (SiO₂), la magnésie (MgO) et l'alumine (Al₂O₃). Un constituant important de ce laitier est l'orthosilicate de calcium 2CaO.SiO₂, appelé également silicate bicalcique. Cet orthosilicate de calcium se présente sous deux formes allotropiques bêta et gamma. La forme bêta est métastable et a tendance à se transformer en la forme gamma qui elle est stable à la température ambiante. La transformation de la forme bêta en la forme gamma s'accompagne d'un accroissement de volume de l'ordre de 15%, ce qui produit une désagrégation de la roche. Cette particularité du LAFE présentait jusqu'à présent un inconvénient important dans son utilisation pour les assises de chaussées et jusqu'à présent le LAFE était peu ou pas utilisable et constituait un sous-produit encombrant et polluant pour l'environnement.

Un besoin existait par conséquent à trouver un débouché utile pour le LAFE. JP-A-5905158 décrit une composition contenant 90% de laitier de four electrique.

On a découvert que l'inconvénient lié à l'utilisation du LAFE pouvait être surmonté et que le LAFE (laitier d'aciérie de four électrique) pouvait être utilisé pour la préparation d'une assise de chaussée ayant une bonne stabilité, en transformant au préalable ledit LAFE en une composition pour revêtement routier comprenant les caractéristiques de la revendication 1.

Le sable LAFE et la grave LAFE sont préparés à partir du laitier d'aciérie de four électrique, par concassage, déferraillage et criblage du LAFE, permettant d'obtenir un sable LAFE d'une granulométrie de O/8 mm ou une grave LAFE d'une granulométrie de O/31,5 et de préférence de O/2O mm ou de O/14 mm. Une grave O/31,5, respectivement O/2O ou O/14, est un mélange à granulométrie continue jusqu'à 31,5 mm, respectivement jusqu'à 2O mm ou jusqu'à 14 mm.

On entend par déferraillage du laitier, l'opération permettant de retirer du laitier les particules de métaux magnétiques. L'opération de déferraillage est importante pour la stabilité de l'assise de chaussée.

Le liant (b) est choisi parmi les liants hydrauliques, les cendres volantes pouzzolaniques, les dérivés des cendres volantes pouzzolaniques et leurs mélanges. Parmi les liants hydrauliques, on préfère les laitiers granulés des hauts fourneaux, les ciments normalisés à base de laitiers granulés et les liants spéciaux à usage routier. Les liants spéciaux à usage routier comprennent les produits dénommés ARC (Activant Routier CEDEST) fabriqués par CEDEST, et notamment les produits dénommés ARC 1, ARC 2 et ARC 3.
ARC 1 comprend environ 85% en poids de laitier granulé de haut fourneau, le complément étant constitué par de la chaux (CaO).
ARC 2 comprend environ 75 à 80% de laitier granulé de haut fourneau, le reste étant constitué par un activant sulfatique formé en majeure partie par du sulfate de calcium naturel.
ARC 3 comprend environ 80% en poids de laitier granulé de haut fourneau, le complément jusqu'à 100% étant constitué de CaO et de sulfate de calcium (SO₄Ca).

Parmi les ciments normalisés, on obtient de bons résultats avec les ciments CLK (ciment de laitier au clinker) et plus particulièrement avec le ciment CLK 45, vendu par CEDEST, ainsi qu'avec les ciments CPJ et plus particulièrement avec le ciment CPJ 45 fabriqué par différentes sociétés.

Les ciments CLK comprennent environ 80 parties en poids de laitier granulé de hauts fourneaux, le complément étant constitué en majeure partie par du clinker et par une quantité moindre de gypse.

Le clinker est une roche artificielle formée de silicate et d'aluminate de calcium anhydre, obtenu par cuisson, vers 1450°C.

Les ciments CPJ appartiennent à la classe des ciments Portland composés. Ils renferment environ 70% de clinker, environ 23% de cendres, le reste étant constitué par du laitier et une petite quantité de sulfate de calcium naturel.

On utilise comme activant la chaux sous forme de chaux vive CaO ou sous forme de chaux éteinte Ca(OH)₂.

Les ciments normalisés et les liants spéciaux à usage routier peuvent jouer également le rôle de liant/activant. Autrement dit, les ciments normalisés et les liants spéciaux à usage routier peuvent être utilisés soit comme liant hydraulique, soit comme liant/activant. On entend par liant/activant un produit qui joue à la fois le rôle de liant et le rôle d'activant. C'est un liant qui ne nécessite pas la présence d'un activant.

Une composition pour assise de chaussée de bonne qualité selon l'invention, comprend de 93 à 98% en poids de grave LAFE et de 2 à 7% en poids de liant/activant choisi parmi les produits dénommés ARC 1, ARC 2 et ARC 3.

Une autre composition selon l'invention donnant de bons résultats comprend de 93 à 96% en poids de grave LAFE et de 4 à 7% en poids de liant/activant choisi parmi les ciments CLK et les ciments CPJ.

On obtient également de bons résultats avec la composition comprenant :

| | |
|---|---|
| sable ou grave LAFE préparés par concassage, déferraillage et criblage du laitier d'aciérie | 74 ± 5% |
| laitier granulé de haut fourneau | 25 ± 5% |
| chaux vive ou éteinte | 1% |

Un autre groupe de compositions permettant d'obtenir des assises de chaussées de bonne qualité est le suivant :
sable LAFE ou grave LAFE en une quantité égale ou supérieure à 53% en poids,
un ou plusieurs activants de prise, en une quantité de 1 à 3% en poids,
un ou plusieurs liants hydrauliques complétant la composition jusqu'à 100% en poids.

Une autre composition comprend :

| | |
|---|---|
| sable ou grave LAFE préparés par concassage, déferraillage et criblage du laitier d'acierie | 58 ± 5% |
| laitier granulé de haut fourneau | 20 ± 5% |
| cendres volantes pouzzolaniques | 20 ± 5% |
| chaux vive ou éteinte | 2 ± 1% |

Les compositions pour assise de chaussée selon l'invention durcissent progressivement dans le temps, conduisent à la formation d'une structure solide et stable et peuvent être classées dans la classe C ou dans la classe D de la "Classification des sables pour chaussées neuves à fort et moyen trafic, dimensionnées par le catalogue des structures types des chaussées neuves (DRCR- 1977)" ou dans la classe des graves traitées.

La classe C prévoit pour les sables-laitiers traités une résistance à la traction (Rt), mesurée après 180 jours, supérieure à 0,4 MPa et pour les sables-ciments traités une résistance à la traction Rt mesurée à 90 jours, supérieure à 0,5 MPa.

La classe D prévoit pour les sables-laitiers traités une valeur de Rt à 180 jours, supérieure à 0,65 MPa et pour les sables-ciments traités une valeur Rt à 90 jours supérieure à 0,75 MPa.

On entend par sables-ciments traités, des compositions comprenant en plus du sable LAFE également un ciment normalisé et on entend par sables-laitiers traités des compositions comprenant en plus du sable LAFE un liant et un activant ou un liant/activant, mais ne comprenant pas de ciment.

On entend par graves traitées des compositions comprenant en plus de grave LAFE également un ciment ou un liant spécial à usage routier ou un liant et un activant ou bien un liant/activant.

L'analyse granulométrique d'une composition selon l'invention, préparée à partir d'un sable et d'une grave LAFE ou à partir d'une grave LAFE O/14 ou O/2O et d'un liant hydraulique ou d'un liant/activant, figure sur les tableaux I et II ci-après.

**TABLEAU I**

| Analyse granulométrique d'une composition préparée à partir d'une grave O/14 et d'un liant ou d'un liant/activant. | | |
|---|---|---|
| dimension des particules mm | Tamisats % cumulés | |
| | minimum | maximum |
| 25 | 100 | |
| 14 | 85 | 100 |
| 10 | 68 | 97 |
| 6,3 | 50 | 84 |
| 4 | 38 | 71 |
| 2 | 26 | 56 |
| 0,5 | 13 | 32 |
| 0,2 | 9 | 21 |
| 0,08 | 5 | 12 |

**TABLEAU II**

| Analyse granulométrique d'une composition préparée à partir d'une grave O/2O et d'un liant ou d'un liant/activant. | | |
|---|---|---|
| dimension des particules mm | Tamisats % cumulés | |
| | minimum | maximum |
| 31,5 | 100 | |
| 20 | 85 | 100 |
| 10 | 55 | 88 |
| 6,3 | 42 | 74 |
| 4 | 32 | 66 |
| 2 | 23 | 54 |
| 0,5 | 11 | 31 |
| 0,2 | 7 | 21 |
| 0,08 | 4 | 12 |

Sur les tableaux I et II, la première colonne de gauche indique la dimension des particules et les deux autres colonnes indiquent le minimum, respectivement le maximum des tamisats cumulés en %.

La composition chimique moyenne du sable et grave de LAFE est indiquée ci-après.

| | | | | | |
|---|---|---|---|---|---|
| Fe | 16,57 | Cd | < 0,005 | S | < 0,05 |
| CaO | 40,52 | Cr | 1,845 | F⁻ | 1,2650 |
| SiO₂ | 11,96 | Cu | 0,0115 | As | 0,002 |
| MgO | 9,70 | Mn | 4,085 | V | 0,0395 |
| Al₂O₃ | 4,30 | Ni | 0,0065 | Be | 0 |
| Na | 0,025 | Pb | 0,0045 | Sc | 0,0010 |
| K | 0,015 | Sn | < 0,005 | | |
| P₂O₅ | 0,655 | Zn | 0,002 | | |
| Ti | 0,15 | Mo | 0,0055 | | |

Les teneurs minimales et maximales des principaux constituants sont les suivantes :

| | Minimum | Maximum |
|---|---|---|
| Fe | 14 | 19 |
| CaO | 37 | 43 |
| SiO₂ | 11 | 13 |
| MgO | 8 | 11 |
| Al₂O₃ | 3 | 6 |

Les graves LAFE traitées selon l'invention ont une résistance à la traction mesurée après un durcissement de 360 jours, égale ou supérieure à 0,65 MPa pour la grave LAFE-laitier, égale ou supérieure à 0,80 MPa pour la grave LAFE-laitier prébroyé et égale ou supérieure à 1,10 MPa pour les graves-ciments normalisés ou graves-liants spéciaux.

On entend par grave-laitier prébroyé le mélange de grave LAFE 0/31,5 ou 0/20 ou 0/14 min, avec un laitier granulé broyé à une granulométrie 0/2 mm contenant 10% en poids de fines moyennes d'une granulométrie égale ou inférieure à 80 microns.

L'invention a également pour objet un procédé de préparation d'une composition permettant l'obtention d'assises de chaussée ayant une bonne stabilité dimensionnelle et une bonne résistance à la traction et à la compression, caractérisé en ce qu'on procède à un concassage, déferraillage et criblage du laitier d'aciérie de four électrique (LAFE) permettant d'obtenir un sable LAFE, de granulométrie d'environ 0/8 mm ou une grave LAFE de granulométrie d'environ 0/31,5 et de préférence d'environ 0/20 ou 0/14 mm, qu'on mélange le sable LAFE ou la grave LAFE ainsi obtenu avec un ou plusieurs liants hydrauliques, cendres volantes pouzzolaniques, dérivés de cendres volantes pouzzolaniques ou leurs mélanges, et au moins un activant ou bien avec au moins un liant/activant.

Une variante du procédé de préparation selon l'invention est caractérisée par le fait qu'on procède à un concassage, déferraillage et criblage du LAFE pour préparer un sable LAFE d'une granulométrie d'environ 0/8 mm, d'une part, et une grave LAFE d'une granulométrie d'environ 0/31,5 mm et de préférence d'environ 0/20 mm ou 0/14 mm, d'autre part, qu'on mélange le sable LAFE et la grave LAFE avec un ou plusieurs liant(s) choisi(s) dans le groupe formé par les liants hydrauliques, les cendres volantes pouzzolaniques, les dérivés des cendres volantes pouzzolaniques et leurs mélanges, et avec au moins un activant ou bien avec au moins un liant/activant.

Lorsqu'on mélange du sable LAFE et de la grave LAFE, les proportions de sable LAFE sont de 15 à 65%, et de préférence de 20 à 60% en poids et les proportions de grave LAFE sont de 15 à 65%, et de préférence de 20 à 60% en poids, du poids total sable LAFE + grave LAFE

D'autres objets de l'invention apparaîtront à la lecture de la description et des exemples.

L'invention est illustrée par les exemples non limitatifs ci-après, dans lesquels les pourcentages s'entendent en poids sur matière sèche et dans lesquels le sable LAFE désigne du sable d'une granulométrie d'environ 0/8 mm, et la grave LAFE désigne des granulats d'une granulométrie d'environ 0/31,5 mm et de préférence d'environ 0/20 ou 0/14 mm, obtenus par concassage, déferraillage et criblage du laitier d'aciérie de four électrique.

| EXEMPLE 1 | |
|---|---|
| Sable LAFE ou grave LAFE | 96% |
| Ciment CLK 45 | 4% |

| EXEMPLE 2 | |
|---|---|
| Sable LAFE ou grave LAFE | 93% |
| Ciment CLK 45 | 7% |

| EXEMPLE 3 | |
|---|---|
| Sable LAFE ou grave LAFE | 93% |
| Produit dénommé ARC 1, ARC 2 ou ARC 3 | 7% |

| EXEMPLE 4 | |
|---|---|
| Sable LAFE ou grave LAFE | 98% |
| Produit dénommé ARC 1, ARC 2 ou ARC 3 | 2% |

| EXEMPLE 5 | |
|---|---|
| Sable LAFE ou grave LAFE | 79% |
| Laitier granulé de haut fourneau | 20% |
| Chaux vive | 1% |

| EXEMPLE 6 | |
|---|---|
| Sable LAFE ou grave LAFE | 69% |
| Laitier granulé de haut-fourneau | 30% |
| Chaux vive | 1% |

| EXEMPLE 7 | |
|---|---|
| Sable LAFE ou grave LAFE | 53% |
| Laitier granulé de haut fourneau | 22% |
| Cendres volantes | 23% |
| Chaux vive | 2% |

| EXEMPLE 8 | |
|---|---|
| Sable LAFE ou grave LAFE | 57% |
| Laitier granulé de haut fourneau | 20% |
| Cendres volantes | 20% |
| Chaux vive | 3% |

| EXEMPLE 9 | |
|---|---|
| Sable LAFE ou grave LAFE | 70% |
| Laitier granulé de haut fourneau | 29% |
| Chaux vive | 1% |

| EXEMPLE 10 | |
|---|---|
| Sable LAFE ou grave LAFE | 74% |
| Laitier granulé de haut fourneau | 25% |
| Chaux vive | 1% |

| EXEMPLE 11 | |
|---|---|
| Grave LAFE 0/20 | 97,5% |
| Produit dénommé ARC 3 | 2,5% |

## Revendications

1. Utilisation pour la réalisation d'assises de chaussées d'une composition comprenant :
(a) du sable ou de la grave préparés par concassage, déferaillage et criblage à partir de laitier d'aciérie de four électrique (sable LAFE) ou (grave LAFE), en une quantité égale ou supérieure à 53 % en poids du poids total de la composition,
(b) un ou plusieurs liant(s) hydraulique(s),
(c) au moins un activant de prise, ou bien
(a) du sable ou de la grave LAFE preparés par concassage, déferaillage et criblage, en une quantité de 93 à 98% en poids,
(d) un ou plusieurs liant hydraulique/activant en une quantité de 2 à 7% en poids, calculé sur le poids total de la composition.

2. Utilisation selon la revendication 1, caractérisée par le fait que le liant hydraulique (b) est choisi dans le groupe formé par les cendres volantes pouzzolaniques, les dérivés des cendres volantes pouzzolaniques et leurs mélanges.

3. Utilisation selon la revendication 2, caractérisée en ce que le liant hydraulique (b) est choisi parmi les laitiers granulés de hauts fourneaux, les ciments normalisés à base de laitier granulés et les liants spéciaux à usage routier.

4. Utilisation selon l'une quelconque des revendications 1 à 3, caractérisée par le fait que l'activant est la chaux vive ou la chaux éteinte.

5. Utilisation selon la revendication 1, caractérisée par le fait que le liant hydraulique/activant (d) est choisi parmi les ciments normalisés à base de laitier granulés et les et les liants spéciaux à usage routier.

6. Utilisation selon la revendication 5, caractérisée par le fait que les ciments sont choisis parmi les ciments CLK et les ciments CPJ.

7. Utilisation selon la revendication 6, caractérisé par le fait que la composition comprend de 93 à 96% en poids de sable ou de la grave LAFE et de 4 à 7% en poids de liant/activant choisi parmi les ciments CLK et les ciments CPJ.

8. Utilisation selon la revendication 5, caractérisée par le fait que les liants spéciaux à usage routier sont choisis parmi les produits dénommés ARC 1, ARC 2, ARC 3 et leurs mélanges.

9. Utilisation selon la revendication 8, caractérisée par le fait que la composition comprend 93 à 98% en poids de grave LAFE et de 2 à 7% en poids de liant/activant choisi parmi les produits dénommés ARC1, ARC2 et ARCS.

10. Utilisation selon l'une quelconque des revendications 1 à 4, caractérisée par le fait que la composition comprend :
| | |
|---|---|
| du sable ou de la grave LAFE | 74 ± 5% |
| laitier granulé de haut fourneau | 25 ± 5% |
| chaux vive ou éteinte | 1% |

11. Utilisation selon l'une quelconque des revendications 1 à 4, caractérisée par le fait que la composition comprend :
| | |
|---|---|
| du sable ou de la grave LAFE | 58 ± 5% |
| laitier granulé de haut fourneau | 20 ± 5% |
| cendres volantes pouzzolaniques | 20 ± 5% |
| chaux vive ou éteinte | 2 ± 1 % |

12. Procédé de préparation d'une composition destinée à la réalisation d'assises de chaussées ayant une bonne stabilité dimensionnelle et une bonne résistance à la traction et à la compression, caractérisé par le fait qu'on procède à un concassage, déferraillage et cablage du laitier d'aciérie de four électrique (LAFE) permettant d'obtenir un sable ayant une granulométrie d'environ 0/8 mm ou une grave ayant une granulométrie d'environ 0/31,5 mm et de préférence d'environ 0/20 mm ou de 0/14 mm, qu'on mélange ce sable LAFE ou grave LAFE ainsi obtenu avec un ou plusieurs liant(s) choisi(s) dans le groupe formé par les liants hydrauliques, les cendres volantes pouzzolaniques, les dérivés des cendres volantes pouzzolaniques et leurs mélanges, et avec au moins un activant ou bien avec au moins un liant/activant.

13. Procédé de préparation d'une composition destinée à la réalisation d'assises de chaussées ayant une bonne stäbilité dimensionnelle et une bonne résistance à la traction et à la compression, caractérisé par le fait qu'on procède à un concassage, déferraillage et criblage du laitier d'aciérie de four électrique (LAFE) permettant d'obtenir, d'une part, un sable LAFE de granulométrie d'environ 0/8 mm et, d'autre part, une grave LAFE de granulométrie d'environ 0/31,5 mm et de préférence d'environ 0/20 ou 0/14 mm, qu'on mélange ensuite le sable LAFE et la grave LAFE ainsi obtenus avec un ou plusieurs liant(s) choisi(s) dans le groupe formé par les liants hydrauliques, les cendres volantes pouzzolaniques, les dérivés des cendres volantes pouzzolaniques et leurs mélanges, et avec au moins un activant ou bien avec au moins un liant/activant.

14. Procédé selon la revendication 13, caractérisé par le fait qu'on mélange le sable LAFE et la grave LAFE dans des proportions de 15 à 65% en poids de sable LAFE et de 15 à 65% de grave LAFE du poids total sable LAFE + grave LAFE.

15. Composition pour assises de chaussées, caractérisée par le fait qu'elle comprend :
| | |
|---|---|
| du sable ou de la grave LAFE préparé par concassage, déferaillage et criblage du laitier d'aciérie | 25 ± 5% |
| laitier granulé de haut fourneau | 25 ± 5% |
| chaux vive ou éteinte | 1% |

16. Composition pour assises de chaussées, caractérisée par le fait qu'elle comprend :
| | |
|---|---|
| du sable ou de la grave LAFE préparé par concassage, déferaillage et criblage du laitier d'aciérie | 58 ± 5% |
| laitier granulé de haut fourneau | 20 ± 5% |
| cendres volantes pouzzolaniques | 20 ± 5% |
| chaux vive ou éteinte | 2 ± 1% |

17. Assise de chaussée réalisée à partir d'une composition pour assise de chaussée préparée d'après un procédé selon l'une quelconque des revendications 12 à 14.

## Claims

1. Use for the construction of road courses of a composition comprising:
(a) sand or gravel prepared from electric furnace steelmaking slag (EFSS sand) or (EFSS gravel), by crushing, scrap-metal removal and screening, in an amount equal to or greater than 53% by weight of the total weight of the composition,
(b) one or more hydraulic binders,
(c) at least one setting activator, or else
(a) EFSS sand or gravel, prepared by crushing, scrap-metal removal and screening, in an amount of 93 to 98% by weight,
(d) one or more hydraulic binders/activators in an amount of 2 to 7% by weight, calculated on the total weight of the composition.

2. Use according to Claim 1, characterized in that the hydraulic binder (b) is chosen from the group formed by pozzolanic fly ash, derivatives of pozzolanic fly ash and mixtures thereof.

3. Use according to Claim 2, characterized in that the hydraulic binder (b) is chosen from granulated blast furnace slag, standardized cements based on slag granulates and special binders for road use.

4. Use according to any one of Claims 1 to 3, characterized in that the activator is quick lime or slaked lime.

5. Use according to Claim 1, characterized in that the hydraulic binder/activator (d) is chosen from standardized cements based on slag granulates and special binders for road use.

6. Use according to Claim 5, characterized in that the cements are chosen from CLK cements and CPJ cements.

7. Use according to Claim 6, characterized in that the composition comprises from 93 to 96% by weight of EFSS sand or gravel and from 4 to 7% by weight of binder/activator chosen from CLK cements and CPJ cements.

8. Use according to Claim 5, characterized in that the special binders for road use are chosen from the products called ARC 1, ARC 2, ARC 3 and mixtures thereof.

9. Use according to Claim 8, characterized in that the composition comprises 93 to 98% by weight of EFSS gravel and from 2 to 7% by weight of binder/activator chosen from the products called ARC 1, ARC 2 and ARC 3.

10. Use according to any one of Claims 1 to 4, characterized in that the composition comprises:
| | |
|---|---|
| EFSS sand or gravel | 74 ± 5% |
| Granulated blast furnace slag | 25 ± 5% |
| Quick or slaked lime | 1% |

11. Use according to any one of Claims 1 to 4, characterized in that the composition comprises:
| | |
|---|---|
| EFSS sand or gravel | 58 ± 5% |
| Granulated blast furnace slag | 20 ± 5% |
| Pozzolanic fly ash | 20 ± 5% |
| Quick or slaked lime | 2 ± 1% |

12. Process for preparing a composition intended for the construction of road courses having good dimensional stability and good tensile and compressive strength, characterized in that the electric furnace steelmaking slag (EFSS) is subjected to crushing, scrap-metal removal and screening, making it possible to obtain a sand having a particle size of approximately 0/8 mm or a gravel having a particle size of approximately 0/31.5 mm and preferably approximately 0/20 mm or 0/14 mm, and in that this EFSS sand or EFSS gravel thus obtained is mixed with one or more binders chosen from the group formed by hydraulic binders, pozzolanic dry ash, derivatives of pozzolanic dry ash and mixtures thereof, and with at least one activator or else with at least one binder/activator.

13. Process for preparing a composition intended for the construction of road courses having good dimensional stability and good tensile and compressive strength, characterized in that the electric furnace steelmaking slag (EFSS) is subjected to crushing, scrap-metal removal and screening, making it possible to obtain, on the one hand, an EFSS sand having a particle size of approximately 0/8 mm and, on the other hand, an EFSS gravel having a particle size of approximately 0/31.5 mm and preferably approximately 0/20 or 0/14 mm, and in that the EFSS sand or the EFSS gravel thus obtained is then mixed with one or more binders chosen from the group formed by hydraulic binders, pozzolanic dry ash, derivatives of pozzolanic dry ash and mixtures thereof, and with at least one activator or else with at least one binder/activator.

14. Process according to Claim 13, characterized in that the EFSS sand and the EFSS gravel are mixed in proportions of 15 to 65% by weight EFSS sand and of 15 to 65% by weight EFSS gravel based on the EFSS sand + EFSS gravel total weight.

15. Composition for road courses, characterized in that it comprises:
| | |
|---|---|
| EFSS sand or gravel prepared by subjecting steelmaking slag to crushing, scrap-metal removal and screening | 74 ± 5% |
| Granulated blast furnace slag | 25 ± 5% |
| Quick or slaked lime | 1% |

16. Composition for road courses, characterized in that it comprises:
| | |
|---|---|
| EFSS sand or gravel, prepared by subjecting steelmaking slag to crushing, scrap-metal removal and screening | 58 ± 5% |
| Granulated blast furnace slag | 20 ± 5% |
| Pozzolanic fly ash | 20 ± 5% |
| Quick or slaked lime | 2 ± 1% |

17. Road course constructed from a road course composition prepared using a process according to any one of Claims 12 to 14.

## Patentansprüche

1. Verwendung einer Zusammensetzung zur Herstellung von Fahrbahnschichten, umfassend:
(a) Sand oder Kies, die durch Grobzerkleinerung, Entfernung von Magnetmetallteilchen und Sieben ausgehend von Elektrostahlofenschlacke (LAFE-Sand) oder (LAFE-Kies) (LAFE = laitier d'acierie de four électrique = Elektrostahlofenschlacke) in einer Menge von mindestens 53 Gew.% des Gesamtgewichts der Zusammensetzung erzeugt wurden,
(b) ein oder mehrere hydraulische Bindemittel,
(c) mindestens ein Aktivierungsmittel für die Bindung,
oder
(a) LAFE-Sand oder LAFE-Kies, die durch Grobzerkleinerung, Entfernung von Magnetmetallteilchen und Sieben in einer Menge von 93 bis 98 Gew.% erzeugt wurden,
(d) ein oder mehrere hydraulische Bindemittel/Aktivierungsmittel in einer Menge von 2 bis 7 Gew.%, bezogen auf das Gesamtgewicht der Zusammensetzung.

2. Verwendung nach Anspruch 1, dadurch gekennzeichnet, daß das hydraulische Bindemittel (b) aus der Gruppe ausgewählt wird, die von den Puzollanflugaschen, den Derivaten der Puzzolanflugaschen und ihren Mischungen gebildet wird.

3. Verwendung nach Anspruch 2, dadurch gekennzeichnet, daß das hydraulische Bindemittel (b) aus den granulierten Hochofenschlacken, den Normenzementen auf der Basis von granulierten Schlacken und den speziellen Bindemitteln zur Verwendung beim Straßenbau ausgewählt wird.

4. Verwendung nach einem der Ansprüche 1 bis 3, dadurch gekennzeichnet, daß das Aktivierungsmittel aus ungelöschtem Kalk oder abgelöschtem Kalk besteht.

5. Verwendung nach Anspruch 1, dadurch gekennzeichnet, daß das hydraulische Bindemittel/Aktivierungsmittel (d) aus den Normenzementen auf der Basis von granulierten Schlacken und den speziellen Bindemitteln zur Verwendung beim Straßenbau ausgewählt wird.

6. Verwendung nach Anspruch 5, dadurch gekennzeichnet, daß die Zemente aus den Hochofen-Portlandzementen 85 (CLK = ciment de laitier au clinker) und den zusammengesetzten Portlandzementen (CPJ = ciments Portland composés) ausgewählt werden.

7. Verwendung nach Anspruch 6, dadurch gekennzeichnet, daß die Zusammensetzung zwischen 93 und 96 Gew.% LAFE-Sand oder LAFE-Kies und 4 bis 7 Gew.% Bindemittel/Aktivierungsmittel aufweist, die aus den Hochofen-Portlandzementen 85 und den zusammengesetzten Portlandzementen ausgewählt werden.

8. Verwendung nach Anspruch 5, dadurch gekennzeichnet, daß die speziellen Bindemittel zur Verwendung beim Straßenbau aus den ARC1, ARC2, ARC3 genannten Produkten und ihren Mischungen ausgewählt werden.

9. Verwendung nach Anspruch 8, dadurch gekennzeichnet, daß die Zusammensetzung 93 bis 98 Gew.% LAFE-Kies und 2 bis 7 Gew.% Bindemittel/Aktivierungsmittel enthält, das aus den Produkten mit den Bezeichnungen ARC1, ARC2, ARC3 ausgewählt wurde.

10. Verwendung nach einem der Ansprüche 1 bis 4, dadurch gekennzeichnet, daß die Zusammensetzung enthält:
| | |
|---|---|
| LAFE-Sand oder -Kies | 74 ± 5% |
| granulierte Hochofenschlacke | 25 ± 5% |
| ungelöschten oder gelöschten Kalk | 1% |

11. Verwendung nach einem der Ansprüche 1 bis 4, dadurch gekennzeichnet, daß die Zusammensetzung enthält:
| | |
|---|---|
| LAFE-Sand oder -Kies | 58 ± 5% |
| granulierte Hochofenschlacke | 20 ± 5% |
| Puzzolanflugaschen | 20 ± 5% |
| ungelöschten oder gelöschten Kalk | 2 ± 1% |

12. Verfahren zur Erzeugung einer Zusammensetzung zur Herstellung von Fahrbahnschichten mit einer guten Formbeständigkeit und einer guten Zug- und Druckfestigkeit, dadurch gekennzeichnet, daß die Elektrostahlofenschlacke (LAFE) grobzerkleinert, von Magnetmetallteilchen befreit und gesiebt wird, wodurch ein Sand mit einer Körnchengröße von etwa 0/8 mm oder ein Kies mit einer Körnchengröße von etwa 0/31,5 mm und vorzugsweise von etwa 0/20 mm oder von 0/14 mm erhalten wird, daß dieser so erhaltene LAFE-Sand oder LAFE-Kies mit einem oder mehreren Bindemittel(n), ausgewählt aus der Gruppe bestehend aus den hydraulischen Bindemitteln, den Puzzolanflugaschen, den Derivaten der Puzzolanflugaschen und ihren Mischungen, und mit mindestens einem Aktivierungsmittel oder auch mit mindestens einem Bindemittel/Aktivierungsmittel gemischt wird.

13. Verfahren zur Erzeugung einer Zusammensetzung zur Herstellung von Fahrbahnschichten mit einer guten Formbeständigkeit und einer guten Zug- und Druckfestigkeit, dadurch gekennzeichnet, daß die Elektrostahlofenschlacke (LAFE) grobzerkleinert, von Magnetmetallteilchen befreit und gesiebt wird, wodurch einerseits ein LAFE-Sand mit einer Körnchengröße von etwa 0/8 mm und andererseits ein LAFE-Kies mit einer Körnchengröße von etwa 0/31,5 mm und vorzugsweise etwa 0/20 mm oder 0/14 mm erhalten wird, daß dann der so erhaltene LAFE-Sand und der LAFE-Kies mit einem oder mehreren Bindemittel(n), ausgewählt aus der Gruppe bestehend aus den hydraulischen Bindemitteln, den Puzzolanflugaschen, den Derivaten der Puzzolanflugaschen und ihren Mischungen, und mit mindestens einem Aktivierungsmittel oder auch mit mindestens einem Bindemittel/Aktivierungsmittel gemischt wird.

14. Verfahren nach Anspruch 13, dadurch gekennzeichnet, daß der LAFE-Sand und der LAFE-Kies in Anteilen von 15 bis 65 Gew.% LAFE-Sand und von 15 bis 65 Gew.% LAFE-Kies, bezogen auf das Gesamtgewicht LAFE-Sand + LAFE-Kies, gemischt werden.

15. Zusammensetzung für Fahrbahnschichten, dadurch gekennzeichnet, daß sie enthält:
| | |
|---|---|
| LAFE-Sand oder LAFE-Kies, hergestellt durch Grobzerkleinerung, Entfernung von Magnetmetallteilchen und Sieben | 74 ± 5% |
| granulierte Hochofenschlacke | 25 ± 5% |
| ungelöschten oder gelöschten Kalk | 1% |

16. Zusammensetzung für Fahrbahnschichten, dadurch gekennzeichnet, daß sie enthält:
| | |
|---|---|
| LAFE-Sand oder LAFE-Kies, hergestellt durch Grobzerkleinerung, Entfernung von Magnetmetallteilchen und Sieben | 58 ± 5% |
| granulierte Hochofenschlacke | 20 ± 5% |
| Puzzolanflugaschen | 20 ± 5% |
| ungelöschten oder gelöschten Kalk | 2 ± 1% |

17. Fahrbahnschicht, die ausgehend von einer Zusammensetzung für eine Fahrbahnschicht hergestellt wird, die gemäß einem Verfahren nach einem der Ansprüche 12 bis 14 erzeugt wurde.
